# EUROPÄISCHE PATENTANMELDUNG

(11) **EP 2 815 931 A1**
(43) Veröffentlichungstag der Anmeldung: **24.12.2014**
(21) Anmeldenummer: 14171312.3
(22) Anmeldetag: 05.06.2014
(51) Int. Cl.: B60S 1/16, F16C 23/10, H02K 7/116

(54) **Scheibenwischermotor**

(30) Priorität: 14.06.2013 DE 102013106221
(71) Anmelder: Valeo Systèmes d'Essuyage, 78321 Le Mesnil Saint Denis (FR)
(72) Erfinder: Stefani, Siegfried, 71739 Oberriexingen (DE); Kapitza, Harald, 71640 Ludwigsburg (DE); Heuberger, Christof, 71691 Freiberg (DE); Hartmann, Werner, 71665 Vaihingen/Enz (DE)
(74) Vertreter: Callu Danseux, Violaine

(57) **Zusammenfassung**

Die Erfindung betrifft einen Scheibenwischermotor (10), mit einem Gehäuse (12) zur Aufnahme einer Getriebeeinrichtung, die ein in einer Achse (13) drehbar gelagertes Getrieberad (20) umfasst, das an seinem Außenumfang eine Verzahnung (21) aufweist, die mit einer Gegenverzahnung (19) an einer Antriebswelle (15) zusammenwirkt, wobei die Achse (13) in einer als Bohrung ausgebildeten Aufnahme (22; 22a bis 22c) des Gehäuses (12) in einer Exzenterbuchse (25; 25a bis 25c) zur Einstellung des Abstands (a) zwischen der Achse (13) und der der Antriebswelle (15) aufgenommen ist, und wobei zwischen der Aufnahme (22; 22a bis 22c) und der Exzenterbuchse (25; 25a bis 25c) zumindest bereichsweise ein Presssitz ausgebildet ist.

## Beschreibung

### Stand der Technik

Die Erfindung betrifft einen Scheibenwischermotor nach dem Oberbegriff des Anspruchs 1, wie er aus der DE 103 43 168 A1 der Anmelderin bekannt ist. Der bekannte Scheibenwischermotor weist ein Gehäuse zur Aufnahme eines Getriebes auf, in das, wie an sich bekannt, die Ankerwelle eines Elektromotors hineinragt. In dem Gehäuse ist ein ein- oder mehrstufiges Getriebe angeordnet, das ein in einer Achse drehbar gelagertes Stirn- bzw. Getrieberad umfasst. Das Getrieberad weist an seinem Außenumfang eine Verzahnung auf, die mit einer an der Ankerwelle des Elektromotors ausgebildeten Gegenverzahnung kämmt. Die Achse ist in einer Exzenterbuchse aufgenommen, die wiederum in einer Durchgangsbohrung des Gehäuses unter Ausbildung eines Presssitzes angeordnet ist. Mittels der Exzenterbuchse lässt sich bei bzw. nach der Montage des Getriebes der axiale Abstand zwischen der Verzahnung der Ankerwelle und der Achse einstellen. Dadurch lässt sich der Wälzpunkt zwischen der Verzahnung am Getrieberad und der Gegenverzahnung an der Ankerwelle zur Erzielung eines möglichst hohen Wirkungsgrads bzw. eines geringen Stromverbrauchs optimieren. Aufgrund der relativ hohen Belastung des Getrieberads bzw. der Achse ist die Exzenterbuchse in der Aufnahme über eine relativ große Länge aufgenommen. Dadurch ergeben sich auch relativ hohe Verstellkräfte, will man die Exzenterbuchse in ihrer Aufnahme im Gehäuse verdrehen, um den axialen Abstand zwischen der Achse und der Ankerwelle einzustellen. Man könnte nun zwar versuchen, durch eine entsprechende Tolerierung des Außendurchmessers der Exzenterbuchse bzw. dem Bohrungsdurchmesser an der Aufnahme die Kräfte der Presspassung zu reduzieren, um damit ein geringeres Verdrehmoment zum Verdrehen der Exzenterbuchse zu benötigen, eine derartige Tolerierung bzw. deren Realisierung und Überwachung ist jedoch aus Kosten- sowie Fertigungsgründen relativ aufwändig.

### Offenbarung der Erfindung

Ausgehend von dem dargestellten Stand der Technik liegt der Erfindung die Aufgabe zugrunde, einen Scheibenwischermotor nach dem Oberbegriff des Anspruchs 1 derart weiterzubilden, dass einerseits eine sichere bzw. stabile Lagerung der Achse in dem Gehäuse ermöglicht wird, und dass andererseits die benötigten Verstellkräfte zum Verdrehen der Exzenterbuchse in der Aufnahme gegenüber dem Stand der Technik bei vorteilhafter Herstellbarkeit der Aufnahme bzw. der Exzenterbuchse reduziert sind.

Diese Aufgabe wird erfindungsgemäß bei einem Scheibenwischermotor mit den Merkmalen des Anspruchs 1 dadurch gelöst, dass die Aufnahme oder/und die Exzenterbuchse in einem axialen Überdeckungsbereich zwischen der Aufnahme und der Exzenterbuchse wenigstens einen Abschnitt aufweist, in dem zumindest über einen Teil eines Umfangsbereichs zwischen der Aufnahme und der Exzenterbuchse kein Presssitz ausgebildet ist, und dass der wenigstens eine Abschnitt in Längsrichtung der Schwenkachse betrachtet zwischen zwei Abschnitten angeordnet ist, an denen ein Presssitz ausgebildet ist.

Dabei ist im Rahmen der Erfindung unter "kein Presssitz" gemeint, dass der Durchmesser der Aufnahme in dem Abschnitt, der keinen Presssitz ausbildet, zumindest dem Durchmesser der Exzenterbuchse entspricht. Die Erfindung sieht daher im axialen Überdeckungsbereich zwischen der Aufnahme und der Exzenterbuchse wenigstens einen Abschnitt vor, in dem kein Presssitz oder aber ein Spalt ausgebildet ist, so dass dieser Abschnitt bezüglich der Höhe der erforderlichen Verstellkraft zum Verdrehen der Exzenterbuchse in der Aufnahme neutral ist bzw. keinen Anteil benötigt. Dadurch wird insbesondere der Vorteil erzielt, dass in den anderen Abschnitten, in denen der Presssitz zwischen Aufnahme und der Exzenterbuchse ausgebildet ist, eine derartige Tolerierung der Durchmesser der Aufnahme bzw. der Exzenterbuchse vorgenommen werden kann, die sich fertigungstechnisch besonders einfach und prozesssicher einhalten lassen, so dass in diesen Bereichen mit relativ geringem Aufwand der Presssitz ausgebildet werden kann.

Vorteilhafte Weiterbildungen des erfindungsgemäßen Scheibenwischermotors sind in den Unteransprüchen aufgeführt.

In besonders bevorzugter Ausgestaltung ist es vorgesehen, dass der Abschnitt, in dem zwischen der Aufnahme und der Exzenterbuchse kein Presssitz bzw. ein Spalt ausgebildet ist, über den gesamten Drehwinkelbereich der Aufnahme oder/und der Exzenterbuchse ausgebildet ist. Eine derartige Ausbildung lässt sich insbesondere fertigungstechnisch besonders einfach realisieren, indem der Abschnitt durch Drehen, Schleifen, Pressen o.ä. hergestellt wird.

Um zu gewährleisten, dass keine Medien, insbesondere keine Feuchtigkeit in den Bereich zwischen der Aufnahme und der Exzenterbuchse gelangt, so dass dieser Bereich insbesondere vor Korrosion geschützt ist, ist es darüber hinaus vorgesehen, dass der Presssitz zumindest in einem Einmündungsbereich der Exzenterbuchse in die Aufnahme des Gehäuses ausgebildet ist.

Um insbesondere eine besonders stabile Lagerung der Achse in der Aufnahme bzw. der Exzenterbuchse zu ermöglichen, die die Einleitung relativ hoher Kippmomente ermöglicht, ohne dass die Achse in der Aufnahme zum Kippen neigt, ist es vorgesehen, dass der Presssitz zusätzlich im Auslaufbereich der Exzenterbuchse aus der Aufnahme innerhalb des Gehäuses ausgebildet ist. Insbesondere ist es vorgesehen, dass der wenigstens eine Abschnitt, in dem kein Presssitz ausgebildet ist gegenüber Abschnitten, die einen Presssitz ausbilden, einen geringeren Durchmesser aufweist

Eine weitere Optimierung hinsichtlich der Einstellung der benötigten Verdrehmomente der Exzenterbuchse lässt sich erzielen, wenn mehrere, axial voneinander beabstandete Abschnitte, die keinen Presssitz ausbilden vorgesehen sind, zwischen denen Abschnitte ausgebildet sind, die Presssitze ausbilden.

Zur Verringerung von etwaigen Kerbwirkungen wird darüber hinaus vorgeschlagen, dass der wenigstens einen Abschnitt, in dem kein Presssitz ausgebildet ist, in einem Übergangsbereich zu dem Abschnitt, der einen Presssitzes ausbildet, mit einer Rundung, einer Fase oder einem Radius versehen ist.

Eine Optimierung bzw. der über die Achse einleitbaren Kippmomente lässt sich bei der zuletzt beschriebenen Variante erzielen, wenn die axiale Länge eines zwischen dem Ein- und dem Auslaufbereich angeordneten Abschnitts, der einen Presssitz ausbildet, kleiner ist als die axiale Länge eines im Ein- und/oder Auslaufbereich angeordneten Abschnitts, der einen Presssitz ausbildet.

Es kann auch vorgesehen sein, dass der Abschnitt, der keinen Presssitz ausbildet, über seine gesamte Länge mit einer Rundung versehen ist. Dadurch wird eine besonders einfache Herstellung dieses Abschnitts ermöglicht.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine perspektivische Ansicht auf einen erfindungsgemäßen Scheibenwischermotor,
- Fig. 2: eine Draufsicht auf den Scheibenwischermotor gemäß Fig. 1 ohne dessen Getriebedeckel,
- Fig. 3: einen Längsschnitt durch den Scheibenwischermotor der Fig. 1,
- Fig. 4: eine perspektivische Darstellung eines Teilbereichs des Scheibenwischermotors gemäß Fig. 3 zur Erläuterung des Einpressvorgangs der Exzenterbuchse in ihre Aufnahme im Gehäuse,
- Fig. 5 bis Fig. 7: jeweils in Seitenansicht unterschiedliche Ausführungsformen von Exzenterbuchsen, wie sie bei einem erfindungsgemäßen Scheibenwischermotor eingesetzt werden können und
- Fig. 8 bis Fig. 10: jeweils Längsschnitte im Bereich erfindungsgemäßer Aufnahmen für eine Exzenterbuchse in dem Gehäuse des Scheibenwischermotors.

Gleiche Elemente bzw. Elemente mit gleicher Funktion sind in den Figuren mit den gleichen Bezugsziffern versehen.

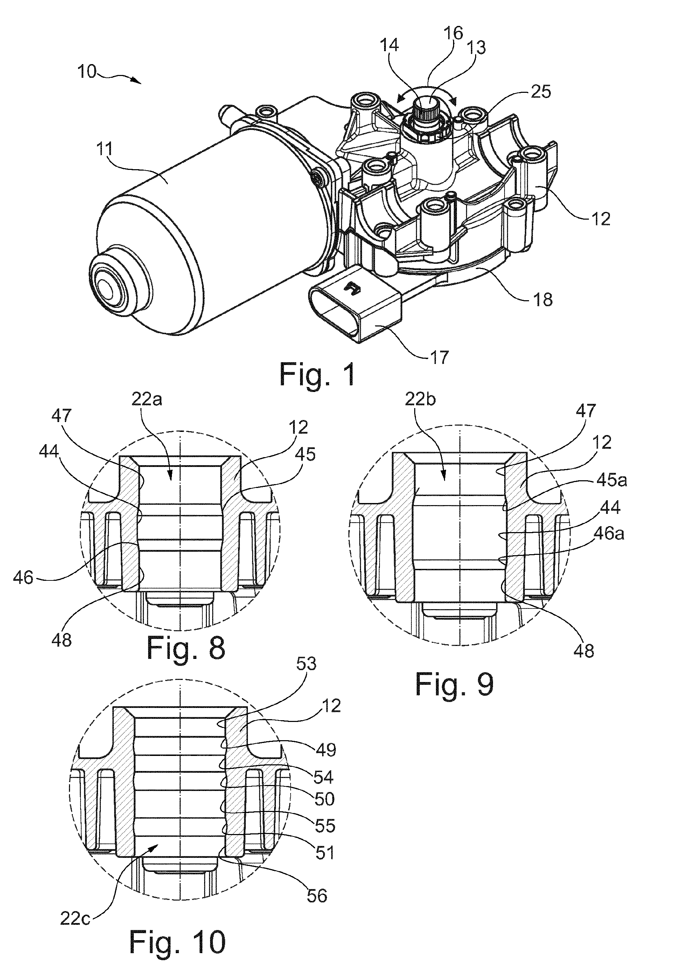

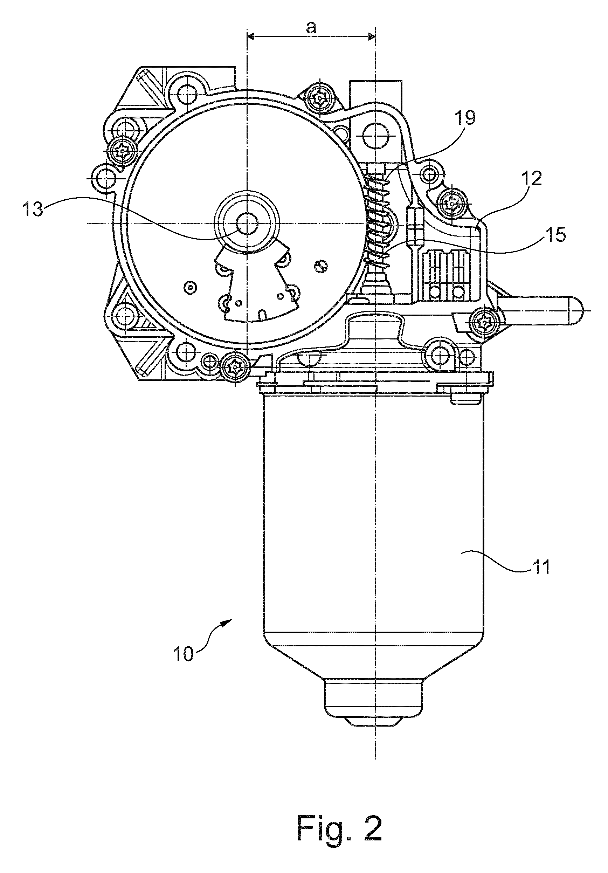

In den Fig. 1 und 2 ist ein erfindungsgemäßer Scheibenwischermotor 10 dargestellt, wie er insbesondere zum Betätigen eines nicht dargestellten Wischgestänges dient. Der Scheibenwischermotor 10 umfasst einen als Elektromotor ausgebildeten Antriebsmotor 11, der an ein Gehäuse 12 des Scheibenwischermotors 10 anflanschbar ist, das der Aufnahme eines im Einzelnen nicht dargestellten Getriebes dient. Das Getriebe dient der Herabsetzung der Drehzahl des Antriebsmotors 11 unter gleichzeitiger Steigerung dessen Drehmoments.

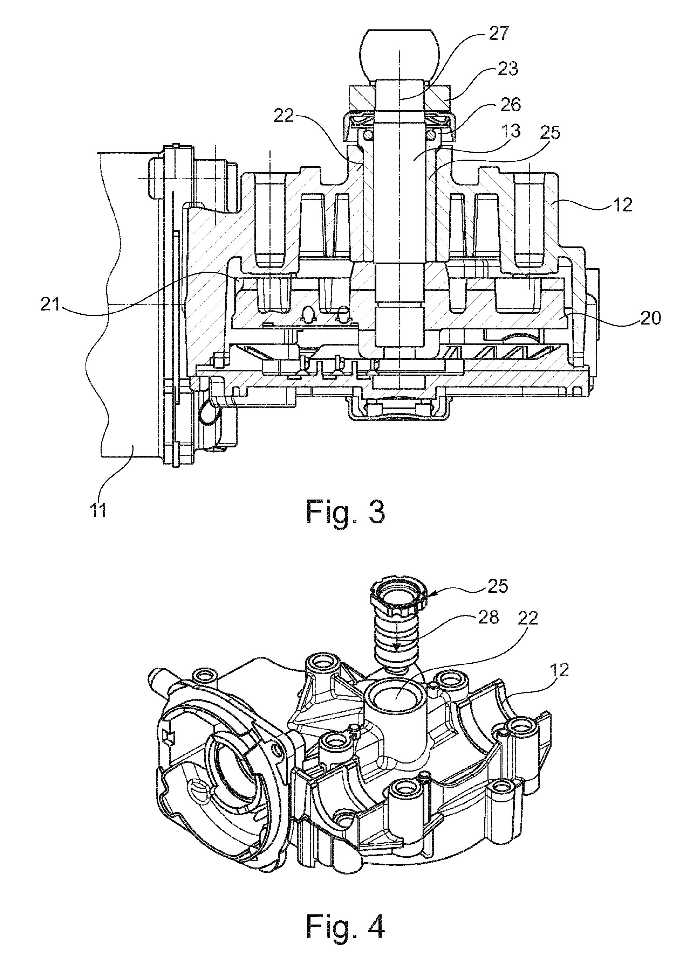

Aus der Oberseite des Gehäuses 12 ragt das obere Ende einer Achse 13 heraus, an deren Außenumfang eine Längsverzahnung 14 ausgebildet ist. Über die Längsverzahnung 14 lässt sich insbesondere ein lediglich in der Fig. 3 erkennbarer Hebel 23 an der Achse 13 drehfest montieren, derart, dass bei einer Drehung der Achse 13 in Richtung des Doppelpfeils 16 der Hebel 23 mitbewegt wird, so dass das Wischgestänge in gewünschter Weise betätigt werden kann. Ferner erkennt man in der Fig. 1 noch einen an dem Gehäuse 12 angeordneten Anschlussstecker 17, der der elektrischen Kontaktierung bzw. Ansteuerung des Antriebsmotors 11 dient. Der Anschlussstecker 17 kann beispielsweise an einem Gehäusedeckel 18 angeformt sein, wobei der Gehäusedeckel 18 aus Kunststoff besteht. Demgegenüber besteht der restliche Teil des Gehäuses 12, insbesondere der Bereich, in dem die Achse 13 angeordnet ist, vorzugsweise aus Aluminium und ist als (Aluminium-) Druckgußteil ausgebildet.

In der Fig. 3 erkennt man, dass die Achse 13 bis in einen Innenraum des Gehäuses 12 hineinragt und dort mit einem Getrieberad 20, das insbesondere als Kunststoffspritzteil ausgebildet ist, drehfest verbunden ist. Das Getrieberad 20 weist an seinem Außenumfang eine Verzahnung 21 auf, die mit einer Gegenverzahnung 19 kämmt, die an dem in das Gehäuse 12 hineinragenden Abschnitt einer Ankerwelle 15 des Antriebsmotors 11 ausgebildet ist (Fig. 2), die als Antriebswelle wirkt. Die angesprochene Gegenverzahnung 19 bzw. Ankerwelle 15 befindet sich in einer zur Zeichenebene der Fig. 2 parallelen Ebene, wie insbesondere anhand der Orientierung des Antriebsmotors 11 erkennbar ist.

In dem Gehäuse 12 ist eine Aufnahme 22 zur Durchführung der Achse 13 als Durchgangsbohrung ausgebildet. In der Aufnahme 22 ist eine Exzenterbuchse 25 aufgenommen, die der Einstellung des axialen Abstands a (Fig. 2) zwischen der Achse 13 und der Ankerwelle 15 dient. Zwischen dem Außenumfang der Exzenterbuchse 25 und der Aufnahme 22 ist zumindest bereichsweise eine Presssitzpassung ausgebildet.

Die Exzenterbuchse 25 weist auf der dem Gehäuse 12 abgewandten Oberseite einen radial umlaufenden Bund 26 auf, der einerseits der Begrenzung der (axialen) Einpresstiefe der Exzenterbuchse 25 in der Aufnahme 22 dient, und der andererseits durch eine entsprechende Geometrie an seinem Außenumfang als Werkzeugaufnahme dient, damit über ein entsprechendes Montage- bzw. Einstellwerkzeug sich die Exzenterbuchse 25 unter Überwindung der Presssitzpassung bzw. des Presssitzes in der Längsachse 27 der Aufnahme 22 drehen lässt. Die Exzenterbuchse 25 weist eine runde, exzentrisch angeordnete Innenbohrung zur drehbaren Lagerung der Achse 13 auf und wird in das Gehäuse 12 in Richtung der in der Fig. 4 durch den Pfeil 28 bezeichneten Richtung in das Gehäuse 12 eingepresst.

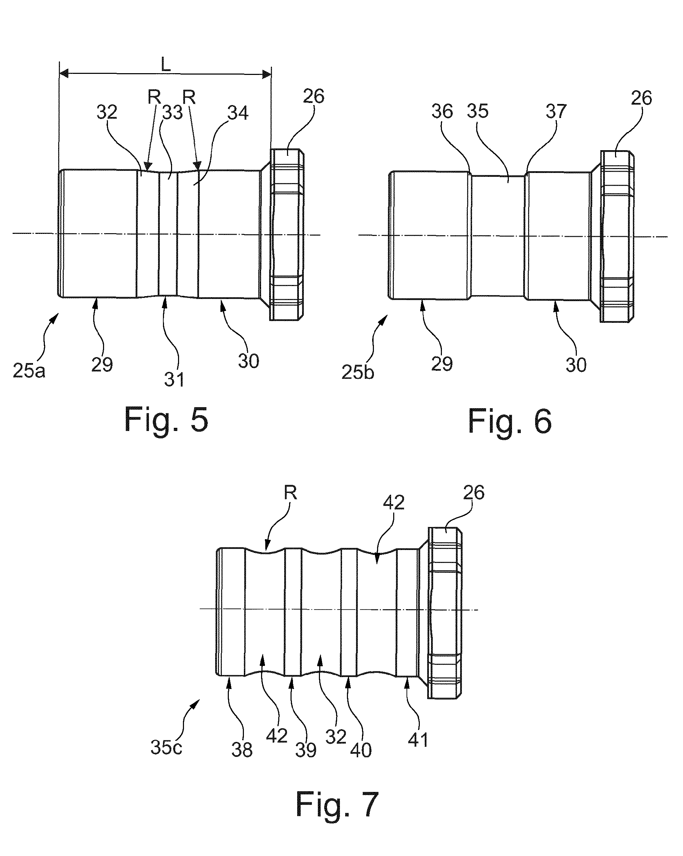

Anhand der Fig. 5 bis 7 ist erkennbar, dass die Exzenterbuchse 25 an ihrem Außenumfang in Richtung ihrer Längsachse betrachtet Abschnitte 29 bis 31, 35 und 38 bis 42 mit unterschiedlichen Durchmessern aufweist.

In der Fig. 5 ist der Fall dargestellt, bei dem die Exzenterbuchse 25a zwei jeweils zylindrisch ausgebildete Abschnitte 29, 30 aufweist, die sich von der einen Stirnseite der Exzenterbuchse 25a bzw. vom Bund 26 her in Richtung zur Mitte der Exzenterbuchse 25a hin erstrecken. Die Exzenterbuchse 25a ist über ihre gesamte Länge L, mit Ausnahme des Bunds 26, in der Aufnahme 22 des Gehäuses 12 aufgenommen. Die Länge L der Exzenterbuchse 25a stellt somit einen axialen Überdeckungsbereich zwischen der Exzenterbuchse 25a und der Aufnahme 22 dar. Der Abschnitt 30, der von dem Bund 26 ausgeht, ist im Einmündungsbereich der Aufnahme 22 in das Gehäuse 12 angeordnet. Demgegenüber ist der Abschnitt 29 im Auslaufbereich der Exzenterbuchse 25a aus der Aufnahme 22 im Gehäuse 12 im Gehäuseinnenraum angeordnet.

In den beiden Abschnitten 29, 30 ist der Durchmesser der Abschnitte 29, 30 derart auf den (konstanten) Durchmesser der Aufnahme 22 abgestimmt, dass in den Abschnitten 29, 30 jeweils ein Presssitz bzw. eine Presssitzpassung ausgebildet ist. Zwischen den beiden Abschnitten 29, 30 ist ein Abschnitt 31 erkennbar, der einen gegenüber den beiden Abschnitten 29, 30 verringerten Durchmesser aufweist, wobei der Abschnitt 31 eine geringere axiale Erstreckung aufweist als die Abschnitte 29, 30. Der Abschnitt 31 gliedert sich in drei Teilabschnitte 32 bis 34, wobei der Teilabschnitt 33 als zylindrischer Abschnitt ausgebildet ist, und die beiden Teilabschnitte 32 und 34 jeweils mit einem Radius R versehen sind. Zwischen dem Abschnitt 31 und dem entsprechenden Bereich der Aufnahme 22 ist ein Spalt ausgebildet, derart, dass zwischen dem Abschnitt 31 und der Aufnahme 22 kein Presssitz ausgebildet wird.

In der Fig. 6 ist eine Exzenterbuchse 25b dargestellt, deren (mittlerer) Abschnitt 35 zumindest nahezu unmittelbar bis an die Abschnitte 29 und 30 heranreicht. Man erkennt lediglich zwei fertigungsbedingte Fasen 36, 37.

In der Fig. 7 ist eine Exzenterbuchse 25c dargestellt, die insgesamt vier axial voneinander beabstandete Abschnitte 38 bis 41 aufweist, in denen zwischen der Exzenterbuchse 25c und der Aufnahme 22 jeweils ein Presssitz ausgebildet ist. Zwischen den einzelnen Abschnitten 38 bis 41 sind drei, jeweils mit einem Radius R ausgebildete Abschnitte 42 mit im Ausführungsbeispiel in etwa jeweils gleicher axialer Erstreckung bzw. Länge ausgebildet, in denen zwischen der Exzenterbuchse 25a und der Aufnahme 22 kein Presssitz, sondern ein Spalt ausgebildet ist. Auch bei diesem Ausführungsbeispiel weisen die Abschnitte 39, 41 eine größere axiale Erstreckung auf als die Abschnitte 39, 40.

Die soweit beschriebenen Exzenterbuchsen 25a bis 25c wirken mit jeweils einer zylindrisch geformten Aufnahme 22 zusammen. Entsprechend den Fig. 8 bis 10 ist es jedoch auch denkbar, dass eine Exzenterbuchse 25 mit einer zylindrischen Mantelfläche, d.h. im Überdeckungsbereich mit der Aufnahme 22 konstantem Außendurchmesser verwendet wird, die mit einer speziell geformten Aufnahme 22 zusammenwirkt, derart, dass entsprechend den oben beschriebenen Ausführungsbeispielen im axialen Überdeckungsbereich zwischen der Aufnahme 22 und der Exzenterbuchse 25 ebenfalls lediglich bereichsweise eine Presspassung ausgebildet ist. Hierzu wird zunächst auf das Ausführungsbeispiel der Fig. 8 mit einer Aufnahme 22a verwiesen. Man erkennt, dass in einem mittleren Bereich der Aufnahme 22a ein im Innendurchmesser vergrößerter Abschnitt 44 ausgebildet ist, der über konische Teilabschnitte 45, 46 mit den beiden, am Einmündungsbereich bzw. am Ausmündungsbereich der Aufnahme 22a angeordneten Abschnitte 47, 48 verbunden ist, in denen der Presssitz zwischen Aufnahme 22a und der Exzenterbuchse 25 (nicht dargestellt) ausgebildet ist.

Bei dem Ausführungsbeispiel gemäß der Fig. 9 sind in der Aufnahme 22b die Abschnitte 45a, 46a, in Abwandlung des Ausführungsbeispiels gemäß Fig. 8, mit einem Radius R versehen.

Zuletzt ist in der Fig. 10 eine Aufnahme 22c dargestellt, bei der, in Analogie zur Exzenterbuchse 25c, insgesamt drei Abschnitte 49 bis 51 mit einem vergrößerten Innendurchmesser vorgesehen sind, wobei die Abschnitte 49 bis 51 in Längsrichtung der Aufnahme 22c betrachtet jeweils etwa die gleiche axiale Erstreckung aufweisen und mit einem Radius R versehen sind. Zwischen den Abschnitten 49 bis 51 sowie an den beiden Stirnseiten befinden sich jeweils zylindrische Abschnitte 53 bis 56, in denen zwischen der Aufnahme 22c und der (nicht dargestellten) Exzenterbuchse 25 ein Presssitz ausgebildet ist. Die Abschnitte 53, 56 weisen eine größere axiale Erstreckung auf als die Abschnitte 54,55.

Der soweit beschriebene Scheibenwischermotor 10 kann in vielfältiger Art und Weise abgewandelt bzw. modifiziert werden, ohne vom Erfindungsgedanken abzuweichen. So ist es beispielsweise denkbar, sowohl an einer Aufnahme 22, als auch an einer Exzenterbuchse 25 Abschnitte mit unterschiedlichen Durchmessern vorzusehen, in denen jeweils ein Presssitz ausgebildet ist bzw. ein Presssitz oder ein Spalt.

### Bezugszeichenliste

- 10: Scheibenwischermotor
- 11: Antriebsmotor
- 12: Gehäuse
- 13: Achse
- 14: Längsverzahnung
- 15: Ankerwelle
- 16: Doppelpfeil
- 17: Anschlussstecker
- 18: Gehäusedeckel
- 19: Gegenverzahnung
- 20: Getrieberad
- 21: Verzahnung
- 22, 22a: Aufnahme
- 22b, 22c: Aufnahme
- 23: Hebel
- 25, 25a: Exzenterbuchse
- 25b, 25c: Exzenterbuchse
- 26: Bund
- 27: Längsachse
- 28: Pfeil
- 29: Abschnitt
- 30: Abschnitt
- 31: Abschnitt
- 32: Teilabschnitt
- 33: Teilabschnitt
- 34: Teilabschnitt
- 35: Abschnitt
- 36: Fase
- 37: Fase
- 38: Abschnitt
- 39: Abschnitt
- 40: Abschnitt
- 41: Abschnitt
- 42: Abschnitt
- 44: Abschnitt
- 45, 45a: Teilabschnitt
- 46, 46a: Teilabschnitt
- 47: Abschnitt
- 48: Abschnitt
- 49: Abschnitt
- 50: Abschnitt
- 51: Abschnitt
- 53: Abschnitt
- 54: Abschnitt
- 55: Abschnitt
- 56: Abschnitt

- a: Abstand
- R: Radius
- L: Länge

## Patentansprüche

1. Scheibenwischermotor (10), mit einem Gehäuse (12) zur Aufnahme einer Getriebeeinrichtung, die ein in einer Schwenkachse (13) drehbar gelagertes Getrieberad (20) umfasst, wobei die Schwenkachse (13) in einer als Bohrung ausgebildeten Aufnahme (22; 22a bis 22c) des Gehäuses (12) in einer Exzenterbuchse (25; 25a bis 25c) zur Einstellung des Abstands (a) zwischen der Schwenkachse (13) und einer Antriebswelle (15) aufgenommen ist, und wobei zwischen der Aufnahme (22; 22a bis 22c) und der Exzenterbuchse (25; 25a bis 25c) zumindest bereichsweise ein Presssitz ausgebildet ist,
**dadurch gekennzeichnet,**
**dass** die Aufnahme (22; 22a bis 22c) oder/und die Exzenterbuchse (25; 25a bis 25c) in einem axialen Überdeckungsbereich zwischen der Aufnahme (22; 22a bis 22c) und der Exzenterbuchse (25;25a bis 25c) wenigstens einen Abschnitt (31; 35; 42; 44; 49 bis 51) aufweist, in dem zumindest über einen Teil eines Umfangsbereichs zwischen der Aufnahme (22; 22a bis 22c) und der Exzenterbuchse (25; 25a bis 25c) kein Presssitz ausgebildet ist, und dass der wenigstens eine Abschnitt (31; 35; 42; 44; 49 bis 51) in Längsrichtung der Schwenkachse (13) betrachtet zwischen zwei Abschnitten (29, 30; 38 bis 41; 47, 48; 53 bis 56) angeordnet ist, an denen ein Presssitz ausgebildet ist.

2. Scheibenwischermotor nach Anspruch 1,
**dadurch gekennzeichnet,**
**dass** der Abschnitt (31; 35; 42; 44; 49 bis 51) über den gesamten Umfangsbereich der Aufnahme (22; 22a bis 22c) oder/und der Exzenterbuchse (25; 25a bis 25c) ausgebildet ist.

3. Scheibenwischermotor nach Anspruch 1 oder 2,
**dadurch gekennzeichnet,**
**dass** der Presssitz zumindest in einem Einmündungsbereich der Exzenterbuchse (25; 25a bis 25c) in die Aufnahme (22, 22a bis 22c) des Gehäuses (12) ausgebildet ist.

4. Scheibenwischermotor nach Anspruch 3,
**dadurch gekennzeichnet,**
**dass** der Presssitz zusätzlich in einem Auslaufbereich der Exzenterbuchse (25; 25a bis 25c) aus der Aufnahme (22; 22a bis 22c) innerhalb des Gehäuses (12) ausgebildet ist.

5. Scheibenwischermotor nach einem der Ansprüche 1 bis 4,
**dadurch gekennzeichnet,**
**dass** der wenigstens eine Abschnitt (31; 35; 42; 44; 49 bis 51), in dem kein Presssitz ausgebildet ist gegenüber Abschnitten (29, 30; 38 bis 41; 47, 48; 53 bis 56), die einen Presssitz ausbilden, einen geringeren Durchmesser aufweist.

6. Scheibenwischermotor nach einem der Ansprüche 1 bis 5,
**dadurch gekennzeichnet,**
**dass** mehrere, axial voneinander beabstandete Abschnitte (31; 35; 42; 44; 49 bis 51), die keinen Presssitz ausbilden vorgesehen sind, zwischen denen Abschnitte (29, 30; 38 bis 41; 47, 48; 53 bis 56) ausgebildet sind, die Presssitze ausbilden.

7. Scheibenwischermotor nach Anspruch 6,
**dadurch gekennzeichnet,**
**dass** die axiale Länge eines zwischen einem Ein- und dem Auslaufbereich angeordneten Abschnitts (31; 39, 40; 54, 55), der einen Presssitz ausbildet, kleiner ist als die axiale Länge eines im Ein- und/oder Auslaufbereich angeordneten Abschnitts (29, 30; 38, 41; 53, 56), der einen Presssitz ausbildet.

8. Scheibenwischermotor nach Anspruch 1 bis 7,
**dadurch gekennzeichnet,**
**dass** der wenigstens einen Abschnitt (31; 35; 42; 44; 49 bis 51), in dem kein Presssitz ausgebildet ist, in einem Übergangsbereich zu dem Abschnitt (29, 30; 38 bis 41; 47, 48; 53 bis 56), der einen Presssitzes ausbildet, mit einer Rundung, einer Fase (36, 37) oder einem Radius (R) versehen ist.

9. Scheibenwischermotor nach einem der Ansprüche 1 bis 8,
**dadurch gekennzeichnet,**
**dass** der Abschnitt (42; 49 bis 51), in dem kein Presssitz ausgebildet ist, über seine gesamte axiale Länge mit einem Radius (R) ausgebildet ist.

10. Scheibenwischermotor nach Anspruch 8,
**dadurch gekennzeichnet,**
**dass** der Abschnitt (31), in dem kein Presssitz ausgebildet ist, einen zylindrischen Teilabschnitt (33) aufweist.

11. Scheibenwischermotor nach einem der Ansprüche 1 bis 10,
**dadurch gekennzeichnet,**
**dass** das Getrieberad (20) an seinem Außenumfang eine Verzahnung (21) aufweist, die mit einer Gegenverzahnung (19) an der Antriebswelle (15) zusammenwirkt.

12. Scheibenwischermotor nach einem der Ansprüche 1 bis 11,
**dadurch gekennzeichnet,**
**dass** die Exzenterbuchse (25; 25a bis 25c) einen aus Aufnahme (22; 22a bis 22c) herausragenden Bund (26) aufweist, der als Werkzeugaufnahme zur Einstellung der Winkellage der Exzenterbuchse (25; 25a bis 25c) in der Aufnahme (22; 22a bis 22c) ausgebildet ist.
